# EUROPEAN PATENT APPLICATION

(11) **EP 1 061 192 A2**
(43) Date of publication of application: **20.12.2000**
(21) Application number: 00305053.1
(22) Date of filing: 14.06.2000
(51) Int. Cl.: E04B 1/94

(54) **Fire barrier**

(30) Priority: 15.06.1999 GB 9913883
(71) Applicant: Shaughnessy, Stephen James, Winsford, Cheshire, CW7 2SX (GB); McCormack, Brendan Joseph, Nordern, Rochdale, Lancashire, OL12 7PN (GB)
(72) Inventor: Shaughnessy, Stephen James, Winsford, Cheshire, CW7 2SX (GB); McCormack, Brendan Joseph, Nordern, Rochdale, Lancashire, OL12 7PN (GB)
(74) Representative: Downey, William Gerrard

(57) **Abstract**

A flexible fire barrier includes at least one layer 30, formed from at least two adjacent overlying sheets of foil having some air, or gas, in between and arranged so that when heated the air or gas expands and separates the sheets. A layer of insulating material 33, which may be a needled glass mat, may be included in the barrier. In particular a glass mat 33 may be sandwiched between two foil layers 30. The barrier may include outer layers of woven glass fibre fabric 31. Sheets of barrier material may be joined by joining foil layers 30 of adjacent sheets. Other layers present in adjacent sheets may also be joined. Layers of adjacent sheets may be joined by folding them together.

## Description

The present invention relates to flexible fire barriers and particularly, although not exclusively, to fire barriers for installation in cavities in buildings.

Cavities in buildings such as roof voids can present a fire safety hazard in that they provide a route for fire to spread rapidly throughout the building. To address this problem it is conventional, and in some cases required by regulations, to divide up such cavities into compartments with barriers that resist the passage of fire.

Flexible fire barriers are known, they typically comprise multiple layers of metallic foil and insulating materials. GB 2311007 discloses a flexible fire barrier comprising two insulating layers, each comprising a glass fibre insulating mat enclosed in an envelope made of metallic foil, positioned between two outer layers of glass fibre fabric. GB 2311008 discloses a flexible fire barrier comprising five layers of aluminium foil alternating with four layers of glass fibre positioned between outer layers of glass fibre fabric.

In order to obtain satisfactory performance from these barriers it is necessary for multiple layers of insulating material to be included.

GB 2311006 discloses a method of joining the edge portions of two adjacent lengths of a flexible fire barrier comprising insulating layers and metallic layers and two outer layers formed from heat resistant woven glass fibre cloth, such as the barriers disclosed in GB 2311007 and GB 2311008. The method involves interleaving the insulating layers and metallic layers of the adjacent lengths and joining their outer layers to hold the insulating and metallic layers in their interleaved condition.

This joining technique can be time consuming to implement and the resulting join can impair the performance of the barrier. One reason for this is thought to be that hot air on one side of the barrier can pass through the outer layer of glass fibre cloth, which is pervious, and then around the ends of the interleaved layers of the join to the inside of the outer layer on the opposite side of the barrier. In use, where such a joined barrier is installed in a cavity and one side is exposed to fire this would lead to premature heating of the non-fire side of the barrier.

It is an object of the present invention to provide an improved flexible fire barrier which is thinner and therefore more economical to produce and easier to install than known flexible barriers, without any reduction, and preferably with an improvement, in fire resistant properties.

It is another object of the present invention to provide an improved method of joining lengths of flexible barrier material which is easier to implement than, and does not impair barrier performance to the extent, of the technique described in GB 2311006.

According to a first aspect of the present invention there is provided a flexible fire barrier comprising at least one layer of duplex metallic foil.

As used herein duplex foil means at least two adjacent overlying sheets of foil having some air, or gas, in between and arranged so that when heated the air or gas expands and separates the sheets.

The air or gas need not be evenly distributed between the sheets. To ensure that some air or gas is present between the sheets one or more of the sheets may include deformations, for example corrugations or an embossed pattern. Deformations could be introduced by pulling a sheet of foil over a roller the surface of which is uneven, for example dimpled.

The duplex foil preferably comprises two sheets of aluminium foil between 20 and 40µm and more preferably about 30µm thick.

Preferably the barrier comprises a layer of insulating material, more preferably only a single layer of insulating material. It is preferred that any insulating material is positioned between two layers of duplex metallic foil.

The use of duplex foil provides good insulative properties which enables less insulating material to be used than with conventional barriers.

Preferably the insulating material comprises glass fibres. These are preferably non-respirable glass fibres and are of mean diameter greater than 6µm. Further, they are preferably comprised in a needled glass mat of between 4 and 8mm and more preferably about 6mm thick.

Preferably the barrier also comprises two outer layers of woven glass fibre fabric, which layers preferably weigh between 180 and 500 g/m² and more preferably about 430 g/m². The outer layers are preferably resistant to temperatures of at least 1000°C. To achieve this the outer layers may be chemically treated to improve heat resistance. A suitable treated woven fabric is that sold under the trade mark FIREHALT SF by Saveguard UK Limited of Tame Valley Mill, Wainwright Street, Dukinfield, Cheshire, SK16 5NB, England.

It is preferred that the barrier does not include any materials, for example adhesives or fastening means, that would generate combustible gases on heating as this could seriously impair the performance of the barrier.

When these preferred features are adopted the barrier typically weighs about 2.0kg/m² is about 8mm thick and is capable of providing 2 hours integrity and 30 minutes insulation when tested to BS 476 part 20/22.

The barrier is preferably provided in sheets. Where an area to be covered by the barrier exceeds the size of a sheet then two or more sheets may be joined together.

In one arrangement two adjacent sheets of barrier are joined by turning back a width of material along the adjacent edges of each sheet and joining the folded widths of each sheet with mechanical fastening means, for example staples. By using this technique it is possible for a barrier to be installed in an aperture from one side only. To maintain the performance of the barrier at a join it is preferred that at least about 50mm of each barrier is turned back and joined to the other barrier. To assist joining of barriers they are preferably marked with guide lines indicating a 50mm margin along opposite sides respectively. This could be achieved by introducing a coloured warp thread in the woven outer layer. The barrier can be folded along the line when making a join.

When joints are made this way the foil layers (which are substantially impervious) of adjacent sheets are tightly joined together, with the other layers of each sheet trapped between them. This restricts or, preferably, substantially prevents the flow of gas through the joint and helps maintain the insulative performance of the barrier. In any event, in contrast to the jointing technique described in GB 2311006, air or gas cannot pass into and through the barrier structure itself by by-passing its constituent layers. Premature heating of the non-fire side is thus eliminated, or at least considerably reduced.

In another arrangement two adjacent sheets are joined by joining the foil layers of adjacent sheets, for example by folding their edges together. The outer layers of adjacent sheets are preferably also joined, for example by folding, stapling, stitching or any other suitable technique. The layers of insulating material may simply be allowed to overlap, but could be joined in some way, for example using a water based high temperature adhesive. A suitable adhesive is a sodium silicate cement. By joining the foil layers the flow of gas through the joint is restricted or, preferably, substantially prevented.

Where a barrier is used to divide up a roof cavity it is common for service conduits to have to pass through the barrier. To accommodate such conduits without affecting barrier performance it is preferred that the conduit is fitted with a cuff which is then secured around an aperture through the barrier. A cuff comprises a tube of woven glass fibre fabric with a flange of fabric at one end. The cuff may be formed from chemically treated fabric.

According to a second aspect of the present invention there is provided a flexible fire barrier comprising two or more sheets of flexible barrier material joined together along adjacent edges thereof, each sheet comprising one or more layers of metallic foil and insulating material wherein at the joint a metallic foil layer of one sheet is joined to a metallic foil layer of an adjacent sheet.

By joining foil layers of adjacent sheets this ensures that there is a substantially impervious layer extending throughout the barrier. This restricts or, preferably, substantially prevents flow of gas through the barrier, particularly at the join, reducing the likelihood that the performance of the barrier is compromised through hot air or gas by-passing the insulation layers.

The barrier preferably also includes woven glass fibre fabric outer layers. The outer layers of adjacent sheets are preferably joined. The insulating layers may simply overlap, but could be joined.

The foil layers of adjacent sheets may be joined by folding them together and fixing the folds in place, so may the outer layers, although other suitable techniques could be used.

For the avoidance of doubt, it is to be understood that the object is to join the foil layers of adjacent sheets in such a way so as to restrict or, preferably, substantially prevent, the flow of gas through the join. The foil layers may be joined directly or indirectly. Additional material may be present between the layers at the join, provided that the object is achieved.

The barrier preferably includes at least one layer of duplex foil. More preferably the barrier includes at least two layers of duplex foil disposed on opposite sides respectively of a layer of glass fibre insulation material.

According to a third aspect of the present invention there is provided a method of joining adjacent sheets of flexible fire barrier comprising one or more layers of metallic foil and insulating material, to form a larger sheet, comprising the steps of: turning back a portion of barrier material along adjacent edges of each sheet and fastening the portions together so that the edge of each sheet is disposed on the same side of the resultant larger sheet.

The turned back portions preferably comprise widths of material, preferably at least 50mm wide. The portions are preferably fastened together with mechanical fastening means which preferably comprise staples, more preferably galvanized steel staples. Two substantially parallel rows of staples are preferably used. The staples in each row are preferably positioned at 100mm centres. The staples in each row are preferably offset with a staple in one row being placed at the mid point of staples in the other row. The two rows are preferably spaced about 25mm apart.

The barrier preferably includes at least one layer of duplex foil. More preferably the barrier includes at least two layers of duplex foil disposed on opposite sides respectively of a layer of glass fibre insulation material.

In order that the invention may be more clearly understood embodiments thereof will now be described, by way of example, with reference to the accompanying drawings in which:-
- Figure 1: shows a part of a fire barrier partly cut away to show its constituent layers;
- Figure 2: shows an expanded cross-section through the barrier of Figure 1;
- Figure 3: shows a partially expanded view of the duplex foil shown in Figure 2;
- Figure 4: shows a cut away view of a barrier of the type shown in Figures 1 to 3 installed in a building;
- Figure 5: shows an enlarged view of the seam of Figure 4;
- Figure 6: shows a cross-sectional view through part of the barrier of Figure 4 to show details of how the barrier is fastened;
- Figures 7A to G: show various stages involved in installing a barrier of the type shown in Figure 4 around a conduit; and
- Figure 8: shows an expanded cross-section through an alternative type of join for a barrier of the type shown in Figures 1 to 3.

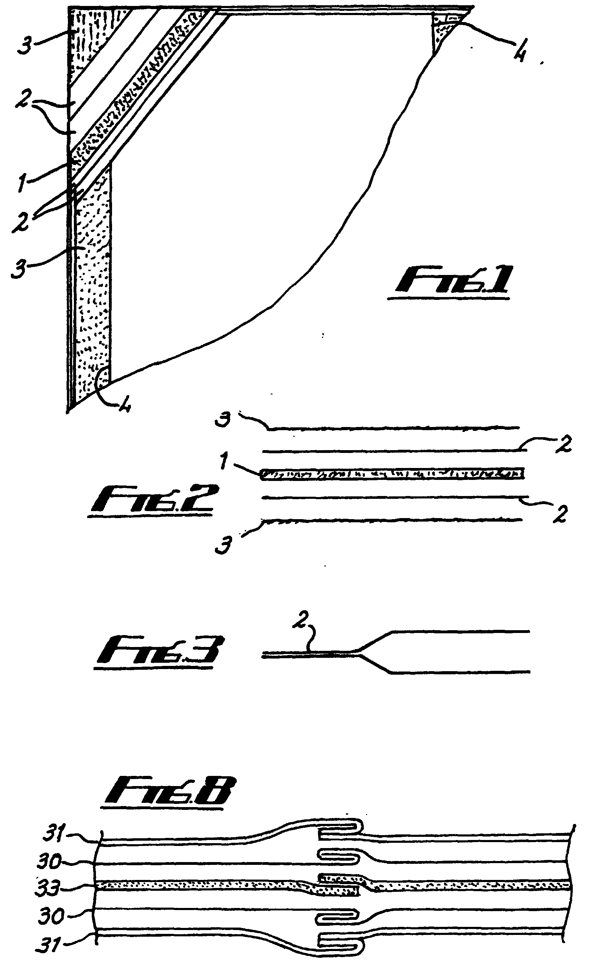

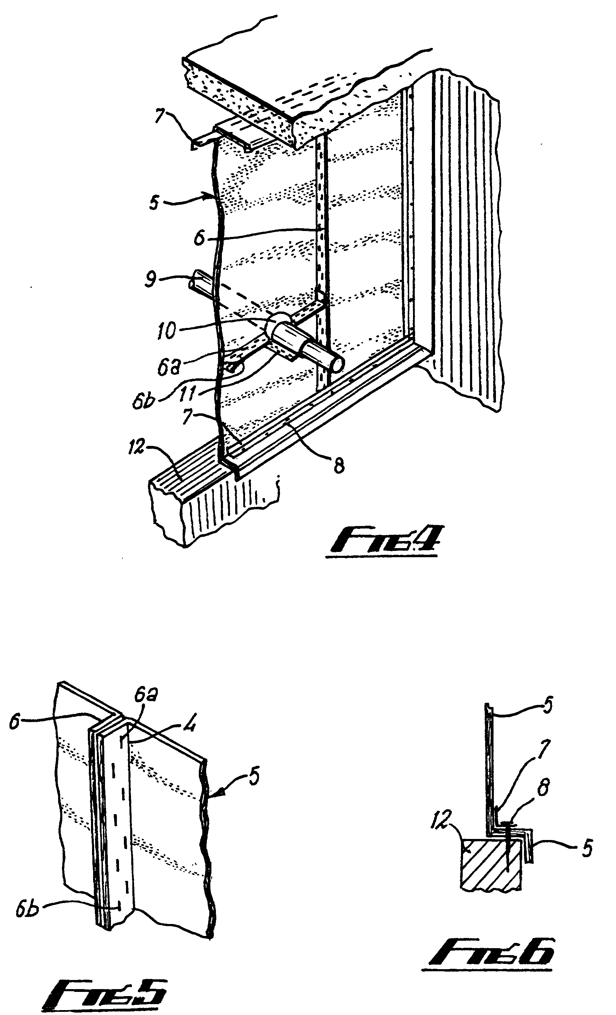

Referring to Figures 1 and 2 a barrier comprises a 6mm thick layer of needled glassmat 1, formed from glass fibres of mean diameter about 9µm. Disposed either side of the glassmat 1 is a layer of duplex aluminium foil 2 about 60µm thick. The pressed (more shiny) side of each foil faces away from the glassmat 1, this helps to reflect heat away from the barrier. Disposed either side of the glassmat 1 and foil 2 composite are layers of plain woven glass fabric 3. The glass fabric 3 comprises 9µm diameter fibres, the mass of the fabric is 430g/m². The fabric is chemically treated to improve its heat resistance. A suitable fabric is that supplied under the trade mark FIREHALT SF by Saveguard UK Limited.

The overall thickness of the barrier is about 8mm.

50mm margins are marked along opposite sides respectively of the barrier, by the incorporation of a coloured warp threads 4 in the woven outer fabric 3. This aids installation of the barrier.

A barrier of the type shown in Figures 1 and 2 was tested to BS 476 part 20/22, which tests both integrity and insulative performance. During the test a barrier was placed over an opening in a furnace. The temperature of furnace was then increased gradually, reaching between 600 and 700°C within 15 minutes, exceeding 800°C within 30 minutes and continuing to rise thereafter.

The integrity test requires that there is no collapse of the barrier, no sustained flaming on the non-fire side of the barrier and no loss of impermeability. These requirements were satisfied for the 132 minute test duration. The barrier was therefore rated at 2 hours for integrity.

The insulation test involves measuring the temperature of the non-fire side of the barrier at a number of points during the test and requires that the mean temperature rise of the non-fire side is not greater than 140°C and that the maximum temperature rise for any one measurement point is not greater than 180°C. These requirements were satisfied for a period of 38 minutes. The barrier was therefore rated at 30 minutes for insulation.

This level of performance is exceptional for a barrier of about 8mm overall thickness.

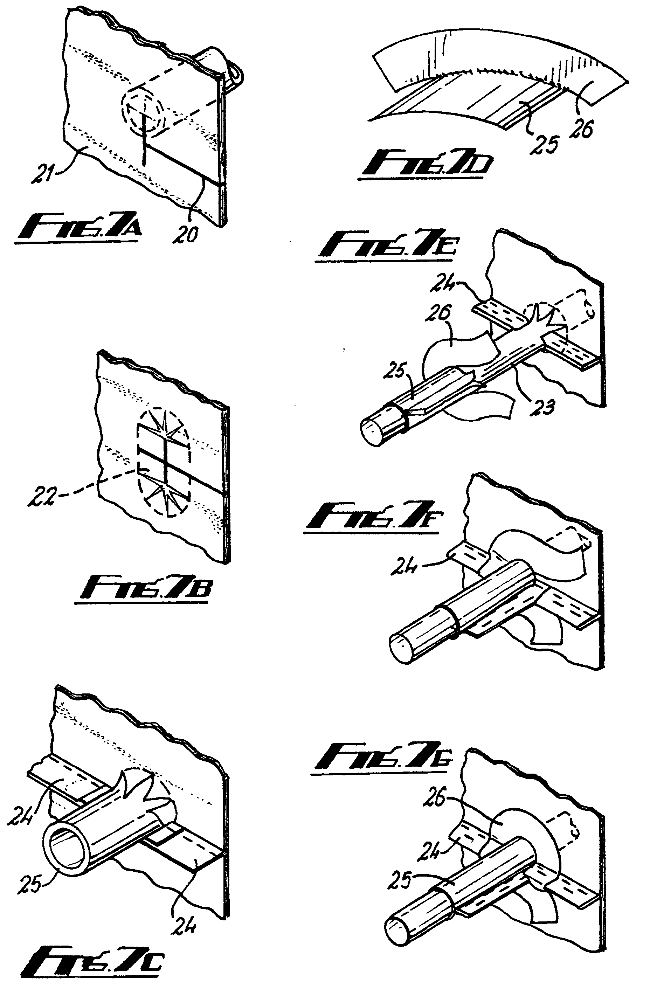

Referring to Figure 3 the duplex foil 2 used in the barrier shown in Figures 1 and 2 comprises two sheets of 30µm thick aluminium foil with some air in between. It is found that when foil is taken from a roll and one sheet placed on top of another sufficient air is usually present, due to creases forming in the foil. Alternatively, one or both sheets could be embossed, or otherwise deformed, for example by pulling the foil over a textured roller. When the barrier is exposed to fire, heating of the air between the sheets causes it to expand considerably and separate the sheets. This enhances the insulating properties of the barrier.

Referring to Figures 4 to 6 a barrier 5, of the type shown in Figures 1 and 2, is shown installed in a building cavity. The barrier 5 comprises a number of separate sheets the edges of which have been folded back generally along the line 4 and the folded portions stapled to the folded portions of adjacent sheets with galvanized staples to form a seam 6.

The seam 6 is stapled with two offset rows of galvanized steel staples 6a. The first row of staples are located as near to the line 4 as possible. The staples 6a are positioned at 100mm centres. The second row of staples 6b is located 25mm from the edge of the material and are also located at 100mm centres. They are offset by 50mm relative to the first row.

Joining the sheets in this way enables a barrier to be installed from one side only of an aperture if required.

The edges of the barrier are fixed to the walls of the cavity with galvanized angle section metal mounting strips 7. The barrier is placed against a surface 12, a mounting strip 7 is placed over the barrier and secured to the surface with galvanized studs 8 which pass through the strip. Other suitable mounting methods could be employed, but it is important that the barrier is snugly fitted around the edges of the cavity where it is installed, to avoid gaps. This can, beneficially, serve to trap the air between the constituent layers of the duplex foils.

A service conduit 9 is shown passing through an aperture in the barrier 5 at a join between two sheets. To seal the region around the conduit 9, it is fitted with a cuff 10. The cuff 10 is formed from a 115g/m² texturised glass fabric which is chemically treated to improve heat resistance.

Figure 7 shows the various stages involved in fitting a barrier around a service conduit 23. Figures 7A to 7C show the initial making of an aperture through a barrier.

Referring to Figure 7A, a cut 20 is made from the edge of the barrier 21 to the vertical centre of the expected penetration, 50mm below the horizontal centre of the expected penetration.

Referring to Figure 7B a hole 22 corresponding to the size of the expected penetration is feather cut.

Referring to Figure 7C the barrier is fed over and around the service conduit 23 and the feathered sections smoothed towards one face of the barrier. The barrier is lifted to form a 50mm deep pleat 24 extending from both sides of the penetration and the pleat stapled in position so that the barrier fits tightly around the penetration.

Next, a cuff is installed around the penetration. These steps are illustrated in Figures 7D to 7G. A cuff is shown in Figure 7D. The cuff comprises a rectangular portion 25 of woven material stitched to a curved flange portion 26 of woven material which extends beyond the edge of the rectangular portion 25.

Referring to Figures 7E and F the cuff is wrapped tightly around the penetration and stapled at 100mm centres to form a seam. The flange 26 is pressed against the barrier, folded over the seam 24 and secured with staples. The feathered sections of the barrier are tucked under the cuff.

Finally, referring to Figure 7G, the ends of the flange are pulled over the seam 24 and stapled thereto.

Figure 8 shows an alternative way in which two adjacent sheets of barrier material of the type shown in Figures 1 to 3 may be joined. The duplex foils 30 of each sheet are joined to each other with a double fold. The fold may be held in place with staples or another suitable fastening technique. The outer fabric layers of each sheet 31 are also folded together. To hold these layers in a folded state they are stapled. The inner glass fibre insulation layers 32 simply overlap, although a suitable high temperature resistant adhesive could be used to join them. Joining the foils 30 establishes an impervious layer throughout the barrier which resists the passage of gas.

The above embodiments are described by way of example only, many variations are possible without departing from the invention.

## Claims

1. A flexible fire barrier comprising at least one layer of duplex metallic foil.

2. A flexible fire barrier as claimed in claim 1, wherein at least one of the sheets forming the duplex foil includes deformations.

3. A flexible fire barrier as claimed in either claim 1 or 2, wherein the duplex foil comprises two sheets of aluminium foil, each between 20 and 40µm thick.

4. A flexible fire barrier as claimed in any preceding claim further comprising a layer of insulating material.

5. A flexible fire barrier as claimed in claim 4, including only a single layer of insulating material.

6. A flexible fire barrier as claimed in either claim 4 or 5, wherein the insulating material comprises glass fibres of mean diameter greater than 6µm.

7. A flexible fire barrier as claimed in any of claims 4 to 6, wherein the layer of insulating material comprises a needled glassmat of between 4 and 8mm thick.

8. A flexible fire barrier as claimed in any preceding claim further comprising two outer layers of woven glass fibre fabric.

9. A flexible fire barrier as claimed in claim 8, wherein the outer layers weigh between 180 and 500g/m².

10. A flexible fire barrier as claimed in any preceding claim of overall weight of about 2.0kg/m² and thickness of about 8mm.

11. A flexible fire barrier as claimed in any preceding claim marked with guide lines along opposite sides respectively to assist in joining the barrier to another barrier.

12. A flexible fire barrier as claimed in any preceding claim comprising two adjacent sheets of material joined together wherein at the join a metallic foil layer of one sheet is joined to a metallic foil layer of the other sheet.

13. A flexible fire barrier as claimed in claim 12, when appendant directly or indirectly to claim 8, wherein at the join the outer layers of adjacent sheets are joined.

14. A flexible fire barrier as claimed in either claim 12 or 13, wherein layers of the adjacent sheets of material are folded together and the fold fixed in place to effect the join.

15. A method of joining two adjacent sheets of a flexible fire barrier as claimed in any of claims 1 to 11 to form a large sheet comprising the steps of: turning back a portion of barrier material along adjacent edges of each sheet, fastening the portions together so that the edge of each sheet is disposed on the same side of the resultant larger sheet.

16. A method as claimed in claim 15, wherein the turned back portions comprise widths of material at least 50mm wide.

17. A method as claimed in either claim 15 or 16, wherein the turned back portions are fastened together with mechanical fastening means.

18. A method as claimed in claim 17, wherein the turned back portions are fastened together with two substantially parallel offset rows of staples, the staples in each row being positioned at 100mm centres and the rows being spaced apart by about 25mm.

19. An installation comprising a barrier as claimed in any of claims 1 to 14, with a service conduit passing therethrough, wherein the conduit is fitted with a cuff comprising a tube of glass fibre fabric with a flange of fabric at one end and the flange is secured to the barrier.

20. A flexible fire barrier comprising two or more sheets of flexible barrier material joined along adjacent edges thereof, each sheet comprising one or more layers of metallic foil and insulating material wherein at the joint a metallic foil layer of one sheet is joined to a metallic foil layer of an adjacent sheet.

21. A flexible fire barrier as claimed in claim 20 further comprising woven glass fabric outer layers.

22. A flexible fire barrier as claimed in claim 21, wherein the outer layers of the adjacent sheets are joined.

23. A flexible fire barrier as claimed in any of claims 20 to 22, wherein the layers of adjacent sheets are folded together and the fold fixed in place to effect the join.

24. A flexible fire barrier as claimed in any of claims 20 to 23 comprising at least one layer of duplex foil.

25. A flexible fire barrier as claimed in any of claims 20 to 24 comprising at least two layers of duplex foil disposed on opposite sides respectively of the layer of glass fibre insulation material.

26. A method of joining adjacent sheets of flexible fire barrier comprising one or more layers of metallic foil and insulating material, to form a larger sheet, comprising the steps of: turning back a portion of barrier material along adjacent edges of each sheet and fastening the portions together so that the edge of each sheet is disposed on the same side of the resultant larger sheet.

27. A method as claimed in claim 26, wherein the turned back portions comprise widths of material at least 50mm wide.

28. A method as claimed in either claim 26 or 27, wherein the turned back portions are fastened together with mechanical fastening means.

29. A method as claimed in any of claims 26 to 28, wherein the turned back portions are fastened together with two substantially parallel offset rows of staples, the staples in each row being positioned at 100mm centres and the rows being spaced apart by about 25mm.

30. A method as claimed in any of claims 26 to 29, wherein the barrier comprises at least one layer of duplex foil.

31. A method as claimed in claim 30, wherein the barrier comprises at least two layers of duplex foil disposed on opposite sides respectively of a layer of glass fibre insulation material.
